# EUROPEAN PATENT SPECIFICATION

(11) **EP 2 440 849 B1**
(45) Date of publication and mention of the grant of the patent: **15.04.2015**
(21) Application number: 10727160.3
(22) Date of filing: 04.06.2010
(51) Int. Cl.: F23J 13/02, F23J 13/04, B28B 21/76, F16L 59/14

(54) **MANUFACTURING METHOD FOR FLUE GAS PASSAGE SECTION WITH FOOTING**
HERSTELLUNGSVERFAHREN FÜR EINEN RAUCHGASKANALABSCHNITT MIT FUSS
METHODE DE FABRICATION D'UNE SECTION DE PASSAGE DE GAZ DE COMBUSTION AVEC UNE BASE

(30) Priority: 05.06.2009 NL 2002978
(43) Date of publication of application: 18.04.2012
(73) Proprietor: J.W. Kloppenburg B.V., 3881 LJ Putten (NL)
(72) Inventor: KLOPPENBURG, Jan, Wiebe, NL-3881 LJ Putten (NL)
(74) Representative: Geurts, Franciscus Antonius
(86) International application number: PCT/NL2010/050340
(87) International publication number: WO 2010/140890

(56) References cited:
- WO-A1-96/10147
- WO-A1-2005/050082
- DE-U- 6 906 395
- DE-U1-202006 005 753
- GB-A- 1 419 810

## Description

### BACKGROUND OF THE INVENTION

The invention relates to a method for manufacturing a flue gas passage section. Due to possible risk of fire, it is important that the flue gas passage is capable of passing the hot flue gasses through under acceptably low heat discharge to the immediate surrounding area.

A known flue gas passage section is provided with an inner jacket and an outer jacket that are concentrically positioned with respect to each other, wherein the space between the inner jacket and the outer jacket is filled up with a flexible insulation blanket and an insulation mass in the form of a hardened mixture of cement and polystyrene granules in order to form a heat-repellent layer. Such flue gas passage section is for example known from the combination of GB 1 419 810 A and WO 96/10147 A1.

In the manufacturing of the known flue gas passage section a footing is placed on a base. The inner jacket and the outer jacket are placed on the footing to keep them mutually positioned, after which a hardening mixture of cement and polystyrene granules is cast to form the insulation mass up to a level at which at the upper side of the flue gas passage section between the inner jacket and the outer jacket an annular space is left in which the next flue gas passage section can be inserted. Although the footing keeps a large part of the mixture inside, a part leaks away along the footing and hardens against the inner jacket or outer jacket. As a result the insulation mass that has leaked away and hardened is a hindrance in the mounting of the discharge channel and the filling level in vertical direction is slightly undefined.

The flue gas passage section is vulnerable and is therefore carefully wrapped in wrapping materials. Despite all this it happens that the flue gas passage section suffers transportation damage, such as dents along the edges that connect to each other, particularly at the side of the annular space. When a flue gas passage is built up with the damaged flue gas passage section, mounting may be difficult or lead to flue gas leakages.

It is an object of the invention to provide a method for the manufacturing of the flue gas passage section, wherein the undefined leaking away of hardening insulation mass is counteracted.

### SUMMARY OF THE INVENTION

The invention provides a method for manufacturing a flue gas passage section by means of a separate footing, wherein the flue gas passage section is provided with a circumferential metal inner jacket, a circumferential metal outer jacket and a circumferential intermediate space between the inner jacket and the outer jacket, wherein the intermediate space is filled with a flexible or resilient heat insulation blanket situated against the inner jacket and a solid cement-bonded insulation mass arranged between the insulation blanket and the outer jacket, wherein the footing is provided with an inner wall, an outer wall and a bottom wall connecting the inner wall and the outer wall to each other, wherein the inner wall and the outer wall rise from the bottom wall to form a circumferential placement channel, wherein the method comprises placing the footing on a base, in its axial longitudinal direction placing the inner jacket upright on the footing, wherein an outer end of the inner jacket comes in abutting contact within the placement channel with the inner wall and preferably the bottom wall, arranging the insulation blanket against the inner jacket, in its axial longitudinal direction placing the outer jacket upright on the footing, wherein an outer end of the outer jacket comes in abutting contact within the placement channel with the outer wall and preferably the bottom wall, filling the intermediate space with the cement-bonded insulation mass and at least partially letting the cement-bonded insulation mass harden, wherein with respect to the bottom wall the inner wall is higher than the outer wall.

The difference in height between the inner wall and the outer wall of the placement channel forces possibly escaping not yet hardened cement-bonded insulation mass to seep away to the outside, as a result of which the inside of the inner jacket can remain free from hardened insulation mass.

In one embodiment, measured with respect to the bottom wall, the inner wall is at least twice as high as the outer wall and preferably at least three times as high as the outer wall.

The inner jacket can connect to the footing all round in a watertight manner when the inner jacket enters into a press fit with the inner wall. This can for instance be realised by arranging a conicity of 0-3 degrees in the inner wall.

Alternatively or additionally the outer jacket enters into a press fit with the outer wall. This can for instance be realised by arranging a conicity of 0-3 degrees in the outer wall.

In one embodiment the footing is manufactured of synthetic material, preferably polystyrene or APET, as a result of which the cement-bonded insulation mass adheres badly to the footing. After the mixture has hardened, the footing can easily be removed again.

### SHORT DESCRIPTION OF THE DRAWINGS

The invention will be elucidated on the basis of a number of exemplary embodiments shown in the attached drawings, in which:
Figure 1 shows an isometric view of an assembly of a flue gas passage section and a footing which can respectively be manufactured and used with the method according to the invention, as well as an upper part and a coupling strap which are not part of the invention.
Figure 2 shows an isometric view of all parts of the assembly according to figure 1, taken apart from each other;
Figure 3 shows an isometric view of the footing and the upper part according to figure 1, shown straight above one another;
Figure 4 shows an isometric view of a stack of several identical assemblies according to figure 1, and
Figure 5 shows a longitudinal section of the assembly according to figure 1, a part of the stack according to figure 4 being schematically shown.

### DETAILED DESCRIPTION OF THE DRAWINGS

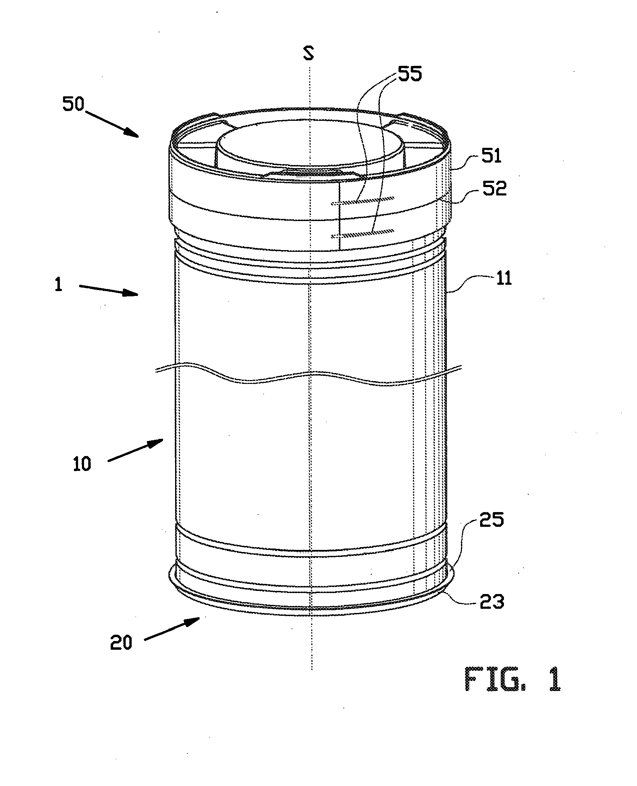

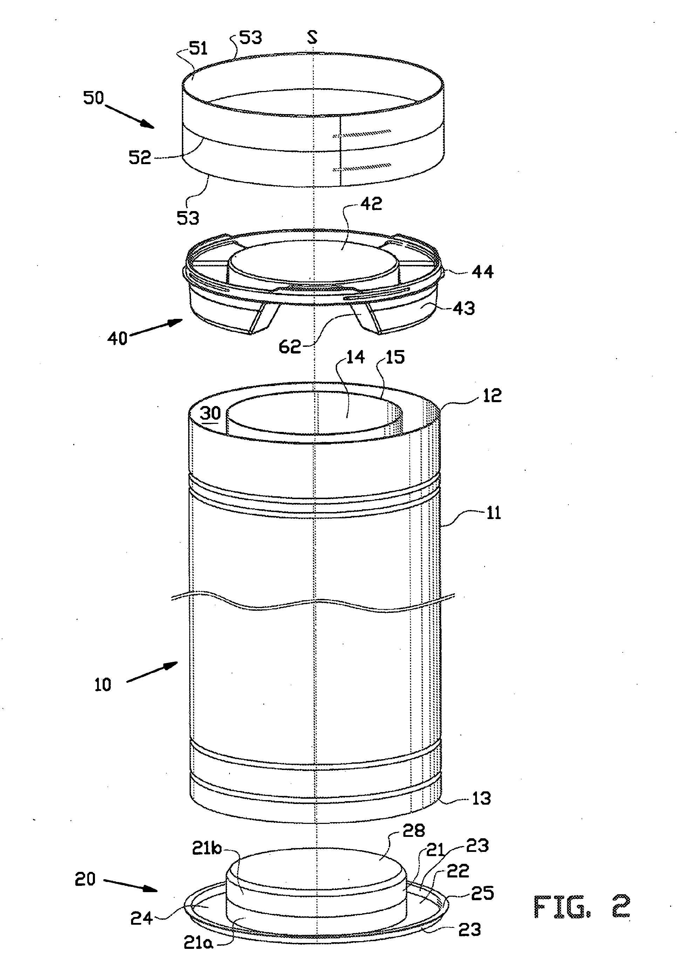

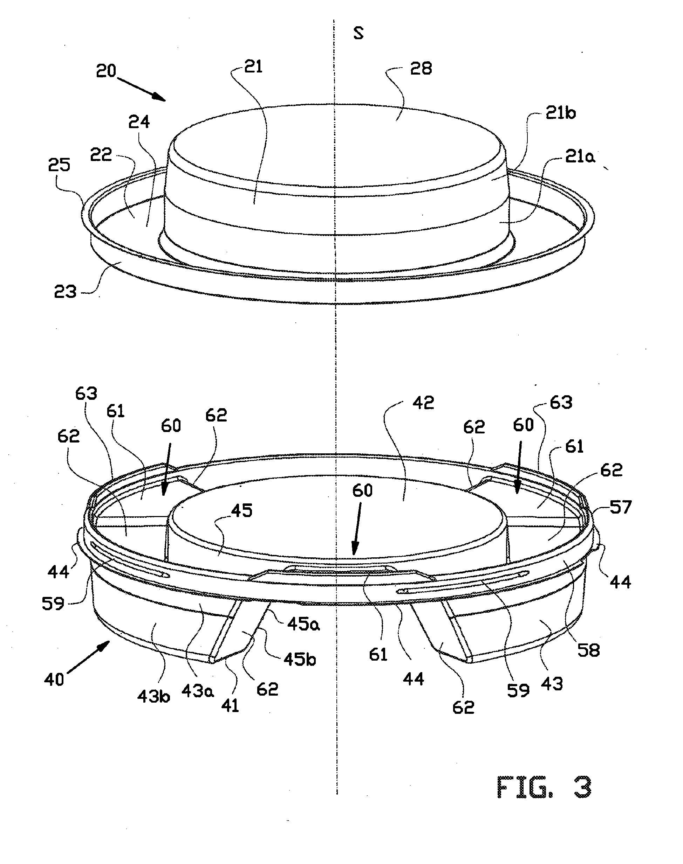

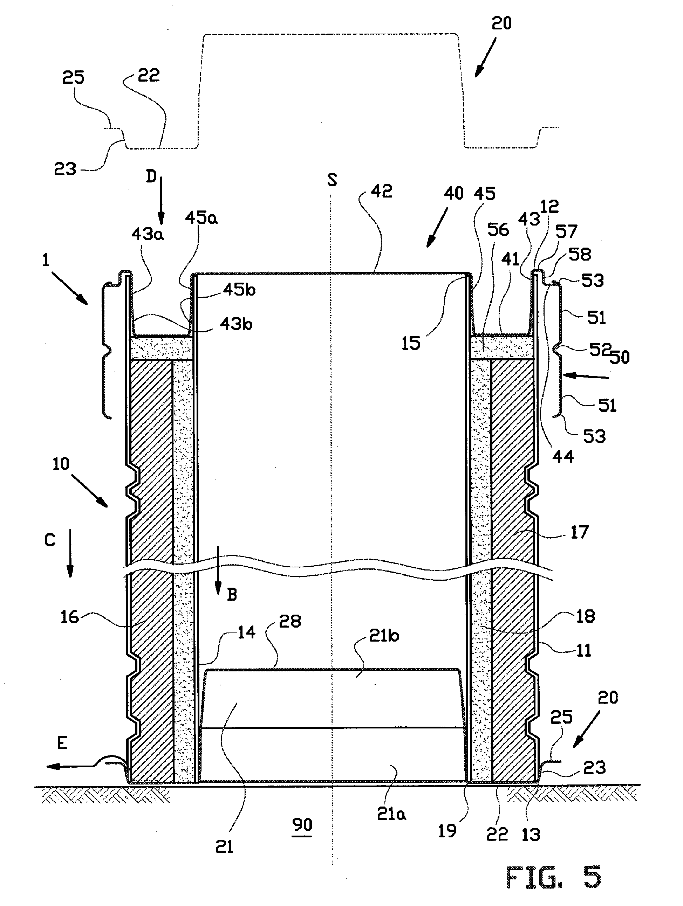

Figure 1 and 5 show an assembly 1 in isometric view and in longitudinal section, respectively, comprising a footing 20 on a base 90, a flue gas passage section 10 placed with the centre line S vertically upright on the base 20, an upper part 40 at the opposite upper side of the flue gas passage section 10, and a coupling strap 50 carried by the upper part 40 said coupling strap and said upper-part not being part of the invention. The various components are also shown in figures 2 and 3 and will be discussed in more detail below.

The flue gas passage section 10 is provided with a straight cylindrical stainless steel inner jacket 14 having a circumferential lower edge 19 and a circumferential upper edge 15 and a straight cylindrical stainless steel outer jacket 11 having a circumferential lower edge 13 and a circumferential upper edge 12 that are positioned concentrically with respect to each other as a result of which a circumferential intermediate space 16 is defined. The intermediate space 16 is filled with a flexible or resilient heat insulation blanket 18 wrapped around the inner jacket 14 and resistant to temperatures of over 400 degrees Celsius, and a solid, shape-retaining insulation mass 17 in the form of a hardened mixture of cement and polystyrene granules. The insulation mass 17 is relatively lightweight due to the polystyrene granules. The polystyrene granules are also called blown or expanded polystyrene. At the bottom side the insulation blanket 18, the insulation mass 17, the lower edge 19 of the inner jacket 14 and the lower edge 13 of the outer jacket 11 are situated in the same plane. At the upper side the upper edge 15 of the inner jacket 14 and the upper edge 12 of the outer jacket 11 are situated in the same plane. The insulation blanket 18 and the insulation mass 17 are recessed up to the same level from the upper edge 15 of the inner jacket 14 and the upper edge 12 of the outer jacket 11, and at that location are covered with a circumferential sealing layer 56 of the same material as the heat insulation blanket 18. The sealing layer 56 is also situated recessed for together with the outer jacket 11 and the inner jacket 14 forming a circumferential accommodation space 30 that is accessible in radial direction, for fitting slightly clamping accommodation of the opposite end of a next flue gas passage section 10 discussed above.

The footing 20 is made of synthetic material, in this example by means of vacuum moulding or injection moulding polystyrene or APET. The footing 20 is provided with a straight sealing wall 28, and an inner wall 21, an outer wall 23 and a bottom wall 22 connecting the inner wall 21 and the outer wall 23 to each other to form a circular circumferential placement channel 24 in which the bottom end of the flue gas passage section 10 is accommodated. In outward direction the outer wall 23 of the footing 20 merges in a shock edge or shock bumper 25 extending in radial direction. At the bottom side the inner wall 21 comprises a first inner wall half 21 a and consecutive thereto a second inner wall half 21 b. The first inner wall half 21 a and the outer wall 23 are removed from each other from the bottom wall 22 at a conicity of less than 3 degrees with respect to the centre line S, and the second inner wall half 21 b with respect thereto has a larger conicity to define a circumferential pilot surface. Measured from the bottom wall 22 the inner wall 21 in this example has a height that is trice as large as the height of the outer wall 23. In the placed condition of the footing 20 the inner wall half 21 a abuts the inner side of the inner jacket 14 in a clamping or pressed manner and the outer wall 23 abuts the outer side of the outer jacket 11 in a clamping or pressed manner. The lower edges 13, 19 support on the bottom wall 22.

The upper part 40 is manufactured of synthetic material, in this example by means of vacuum moulding or injection moulding polystyrene or APET. The upper part 40 comprises a straight sealing wall 42, and a circumferential interrupted inner wall 45, a circumferential interrupted outer wall 43 and a circumferential interrupted bottom wall 41 connecting the inner wall 45 and the outer wall 43 to each other. The inner wall. 45 and the outer wall 43 in the direction of the bottom wall 41 comprise a first inner wall half 45a and first outer wall half 43a, respectively, and consecutive thereto a second inner wall half 45b and second outer wall half 43b, respectively. The outer wall 43 via a radially extending circumferential upper wall 57 merges into a downwardly oriented circumferential shielding wall 58. At the free end the shielding wall 58 merges into a radially extending supporting edge 44 having a circular outer contour, and which is provided halfway with several radially extending locking corrugations 59 that are circumferentially divided. The first outer wall half 43a and the first inner wall half 45a towards the lower edge 41 are at an conicity of less than 3 degrees with respect to the centre line S to each other, and the second inner wall half 45b and the second outer wall half 43b with respect thereto have a larger conicity in order to define circumferential pilot surfaces.

The upper part 40 is provided with three stacking bodies 60 distributed all round and at the level of the supporting edges 44 each having a support surface 61 and two downwardly inclined oriented side surfaces 62 that interrupt the inner wall 45, the outer wall 43 and the bottom wall 41. At the location of the stacking bodies 60 the circumferential upper wall 57 is provided with an elevation 63.

In the placed condition of the upper part 40 the first inner wall half 45a abuts the outer side of the inner jacket 14 in a clamping or pressed manner, the bottom wall 41 abuts the sealing layer 56, the first outer wall half 43a abuts the inner side of the outer jacket 11 in a clamping manner and the shielding wall 58 is situated broadly over the outer side of the outer jacket 11. The sharp upper edge 15 of the inner jacket 14 and the sharp upper edge 12 of the outer jacket 11 are thus fully covered. In the stacked condition of the assemblies 1 the footing 20 with the upper wall 22 supports on the support surfaces 61 of the upper part 40 situated below it, wherein the elevations 63 keep the footing 20 centred on the upper part 40.

The coupling strap 50 is intended for coupling two flue gas passage sections 10 that are situated in each other's extension and partially inserted into each other or keeping them coupled. The coupling strap 50 comprises a circumferential stainless steel clamping strip 51 with in the middle a circumferential centring edge 52 and behind the sides an inwardly facing, circumferential engagement edge 53. The clamping strip 51 is provided with two screw closures 55 in order to reduce the diameter of the clamping strip 51. In its coupling stand-by position, the coupling strap 50 is slid over the shielding wall 58 and the supporting edge 44 and with the upper circumferential engagement edge 53 is suspended from the supporting edge 44, being kept confined behind the locking corrugations 59 passed by. The coupling strap 50 therefore extends along and around the part of the outer jacket 11 that bounds the circumferential accommodation space 30 of the flue gas passage section 10, which part is relatively vulnerable as the intermediate space 16 between the outer jacket 11 and the inner jacket 14 is not filled at that location.

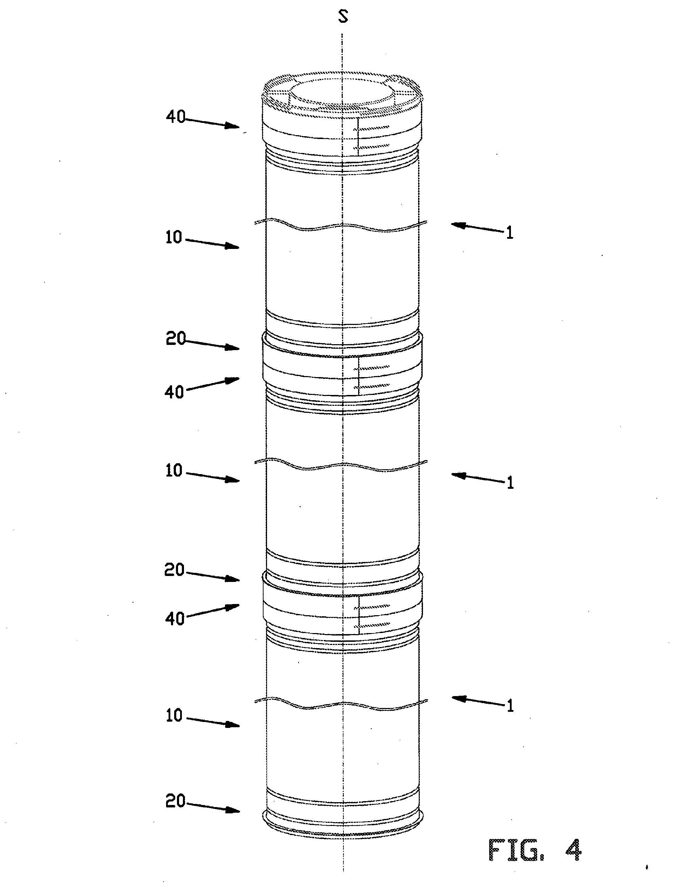

When manufacturing the flue gas passage section 10 first the footing 20 is placed on a base 90. Subsequently the inner jacket 14 is provided with the insulation blanket 18 and placed in direction B in the placement channel 24. Then the outer jacket 11 is placed in direction C in the placement channel 24 and from above in direction D a hardening mixture of cement and polystyrene granules is cast to form the insulation mass 17, wherein due to the difference in height between the inner wall 21 and the outer wall 23 of the footing 20 a fraction of cement will only flow away to the outside in direction E. The footing 20 remains connected to the flue gas passage section 10. After the insertion of the sealing layer 56 the upper part 40 may be placed from above, after which from above the coupling strap 50 may be slid over the upper part 40. After that the assembly 1 is ready for transportation to the location of installation. Here the assemblies 1 can be stacked onto one another as shown in figure 4 and due to the cylindrical shapes be placed next to each other in a compact way. The assemblies 1 can be handled by placing the fingers behind the inner walls 21, 45 of the footings 20 and the upper parts 40, wherein the fingers may press against the sealing walls 28, 14.

The above description is included to illustrate the operation of preferred embodiments of the invention and not to limit the scope of the invention. Starting from the above explanation many variations that fall within the scope of the present invention will be evident to an expert.

## Claims

1. Method for manufacturing a flue gas passage section (10) by means of a separate footing (20), wherein the flue gas passage section is provided with a circumferential metal inner jacket (14), a circumferential metal outer jacket (11) and a circumferential intermediate space (16) between the inner jacket and the outer jacket, wherein the intermediate space is filled with a flexible or resilient heat insulation blanket (18) situated against the inner jacket and a solid cement-bonded insulation mass (17) arranged between the insulation blanket and the outer jacket, wherein the footing (20) is provided with an inner wall (21) an outer wall (23) and a bottom wall (22) connecting the inner wall and the outer wall to each other, wherein the inner wall and the outer wall rise from the bottom wall to form a circumferential placement channel (24)
, wherein the method comprises placing the footing (20) on a base (90), in its axial longitudinal direction placing the inner jacket (14) upright on the footing, wherein an outer end (19) of the inner jacket comes in abutting contact within the placement channel (24) with the inner wall (21) and preferably the bottom wall (22), arranging the insulation blanket (18) against the inner jacket, in its axial longitudinal direction placing the outer jacket (11) upright on the footing (20), wherein an outer end (13) of the outer jacket comes in abutting contact within the placement channel (24) with the outer wall (23) and preferably the bottom wall (22), filling the intermediate space (16) with the cement-bonded insulation mass (17) and at least partially letting the cement-bonded insulation mass harden, **characterised in that** with respect to the bottom wall (22) the inner wall (21) is higher than the outer wall (23).

2. Method according to claim 1, wherein measured with respect to the bottom wall (22), the inner wall (21) is at least twice as high as the outer wall (23).

3. Method according to claim 2, wherein measured with respect to the bottom wall (22), the inner wall (21) is at least three times as high as the outer wall (23).

4. Method according to any one of the preceding claims, wherein the inner jacket (14) enters into a press fit with the inner wall (21).

5. Method according to any one of the preceding claims, wherein the outer jacket (11) enters into a press fit with the outer wall (23).

6. Method according to any one of the preceding claims, wherein the footing (20) is manufactured of synthetic material, preferably polystyrene or APET.

## Patentansprüche

1. Verfahren zur Herstellung eines Rauchgaskanalabschnitts (10) mittels eines getrennten Fundaments (20), wobei der Rauchgaskanalabschnitt mit einer metallenen Umfangsinnenhülle (14), einer metallenen Umfangsaußenhülle (11) und einem Umfangszwischenbereich (16) zwischen der Innenhülle und der Außenhülle versehen ist, wobei der Zwischenbereich mit einem flexiblen oder elastischen Hitzeabschirmtuch (18), das an die Innenhülle anschließt, und mit einer festen zementgebundenen Isoliermasse (17) gefüllt ist, die zwischen dem Abschirmtuch und der Außenhülle angeordnet ist, wobei das Fundament (20) mit einer Innenwand (21), einer Außenwand (23) und einer Bodenwand (22) versehen ist, die die Innenwand und die Außenwand miteinander verbindet, wobei die Innenwand und die Außenwand von der Bodenwand aufragt, um einen Umfangsanordnungskanal (24) zu bilden, wobei das Verfahren das Anordnen des Fundaments (20) auf einer Basis (90) umfasst, wobei ein äußeres Ende (19) der Innenhülle innerhalb des Anordnungskanals (24) anschlägt, wobei die Innenwand (21) und vorzugsweise die Bodenwand (22) das Abschirmtuch (18) gegen die Innenhülle führt, ferner das auf dem Fundament (20) aufrechte Anordnen der Außenhülle (11) in axialer Längsrichtung, wobei en äußeres Ende (13) der Außenhülle innerhalb des Anordnungskanals (24) an die Außenwand (23) und vorzugsweise die Bodenwand (22) anschlägt, weiterhin das Auffüllen des Zwischenbereichs (16) mit der zementgebundenen Isoliermasse (17), und schließlich das wenigstens teilweise Aushärtenlassen der zementgebundenen Isoliermasse, **dadurch gekennzeichnet, dass** die Innenwand (21) in Bezug auf die Bodenwand (22) höher ist als die Außenwand (23).

2. Verfahren nach Anspruch 1, wobei die Innenwand (21) bei Messung in Bezug auf die Bodenwand (22) wenigstens doppelt so hoch ist als die Außenwand (23).

3. Verfahren nach Anspruch 2, wobei die Innenwand (21) bei Messung in Bezug auf die Bodenwand (22) wenigstens dreimal so hoch ist wie die Außenwand (23).

4. Verfahren nach einem der vorangegangenen Ansprüche, wobei die Innenhülle (14) mit der Innenwand (21) in Presssitz eingreift.

5. Verfahren nach einem der vorangegangenen Ansprüche, wobei die Außenhülle mit der Außenwand (23) in Presssitz eingreift.

6. Verfahren nach einem der vorangegangenen Ansprüche, wobei das Fundament (20) aus synthetischem Material gefertigt ist, vorzugsweise aus Polystyrol oder APET.

## Revendications

1. Procédé pour fabriquer une section de passage de gaz de combustion (10) au moyen d'une fondation (20) séparée, dans lequel la section de passage de gaz de combustion est prévue avec une chemise interne métallique circonférentielle (14), une chemise externe métallique circonférentielle (11) et un espace intermédiaire circonférentiel (16) entre la chemise interne et la chemise externe, dans lequel l'espace intermédiaire est rempli avec une couverture à isolation thermique souple ou élastique (18) située contre la chemise interne et une masse d'isolation solide reliée par ciment (17) agencée entre la couverture isolante et la chemise externe, dans lequel la fondation (20) est prévue avec une paroi interne (21), une paroi externe (23) et une paroi inférieure (22) raccordant la paroi interne et la paroi externe entre elles, dans lequel la paroi interne et la paroi externe s'élèvent à partir de la paroi inférieure afin de former un canal de mise en place circonférentiel (24), dans lequel le procédé comprend les étapes consistant à placer la fondation (20) sur une base (90), dans sa direction longitudinale axiale, placer la chemise interne (14) droite sur la fondation, dans lequel une extrémité externe (19) de la chemise interne vient en contact de butée à l'intérieur du canal de mise en place (24) avec la paroi interne (21) et de préférence la paroi inférieure (22), agencer la couverture isolante (18) contre la chemise interne, dans sa direction longitudinale axiale, placer la chemise externe (11) droite sur la fondation (20), dans lequel une extrémité externe (13) de la chemise externe vient en contact de butée à l'intérieur du canal de mise en place (24) avec la paroi externe (23) et de préférence la paroi inférieure (22), remplir l'espace intermédiaire (16) avec la masse isolante liée au ciment (17), et laisser la masse isolante liée au ciment durcir au moins partiellement, **caractérisé en ce que**, par rapport à la paroi inférieure (22), la paroi interne (21) est plus haute que la paroi externe (23).

2. Procédé selon la revendication 1, dans lequel, mesurée par rapport à la paroi inférieure (22), la paroi interne (21) est au moins deux fois plus haute que la paroi externe (23).

3. Procédé selon la revendication 2, dans lequel, mesurée par rapport à la paroi inférieure (22), la paroi interne (21) est au moins trois fois plus haute que la paroi externe (23).

4. Procédé selon l'une quelconque des revendications précédentes, dans lequel la chemise interne (14) entre avec un ajustement avec serrage dans la paroi interne (21).

5. Procédé selon l'une quelconque des revendications précédentes, dans lequel la chemise externe (11) entre avec un ajustement avec serrage dans la paroi externe (23).

6. Procédé selon l'une quelconque des revendications précédentes, dans lequel la fondation (20) est fabriquée avec un matériau synthétique, de préférence du polystyrène ou de l'APET.
